# EUROPEAN PATENT APPLICATION

(11) **EP 0 856 562 A1**
(43) Date of publication of application: **05.08.1998**
(21) Application number: 98101574.6
(22) Date of filing: 29.01.1998
(51) Int. Cl.: C09B 45/04, C09D 11/00

(54) **Recording liquid and novel metal complex compound contained therein**

(30) Priority: 31.01.1997 JP 18577/97; 04.03.1997 JP 48684/97; 15.10.1997 JP 282131/97
(71) Applicant: HODOGAYA CHEMICAL CO LTD, Kawasaki-shi, Kanagawa (JP)
(72) Inventor: Yamazaki, Mitsumasa, Hodogaya Chemical Co., Ltd., Tsukuba-shi, Ibaraki (JP); Miki, Tetsuzo, Hodogaya Chemical Co., Ltd., Tsukuba-shi, Ibaraki (JP); Takano, Keiko, Hodogaya Chemical Co., Ltd., Tsukuba-shi, Ibaraki (JP)
(74) Representative: Wächtershäuser, Günter, Prof. Dr.

(57) **Abstract**

A recording liquid containing at least one metal complex compound selected from the group consisting of compounds of the formula (1), 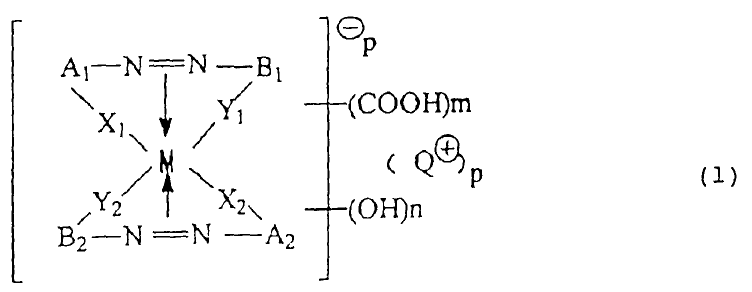 wherein A₁ and A₂ are a substituted or unsubstituted phenyl or naphthyl residue, which may be the same or different, B₁ and B₂ are a substituted or unsubstituted phenyl, naphthyl, pyrazolyl or acetoacetic acid anil residue capable of coupling, which may be the same or different, provided that any of substituents of A₁, A₂, B₁ and B₂ exclude a sulfonic acid group; X₁, X₂, Y₁ and Y₂ are -O-, -COO-, -NR- (in which R is hydrogen or a C₁-C₃ alkyl group) or -S-; m is an integer of from 1 to 6; n is an integer of from 0 to 6; M is Cr, Co, Fe, Ni, Al, Ti or Si; Q is a counter ion; and p is an integer of from 0 to 2.

## Description

The present invention relates to a recording liquid excellent in water resistance and light fastness, which is used for ink jet recording wherein recording is carried out by ejecting and flying an ink through an orifice as small droplets and depositing the droplets on the surface of a recording material, and which is used for an ink of writing goods such as a sign pen or a ball-point pen.

Further, the present invention relates to a novel metal complex compound useful as a dye of a water-soluble recording liquid usable as an ink for an ink jet recording printer and as an ink for various writing goods such as a ball-point pen or a sign pen.

Heretofore, an aqueous ink has been mainly used as an ink for ink jet recording and an ink for writing goods in view of safety and odor. Any of inks is known to be prepared by dissolving or dispersing various water-soluble dyes or pigments and other coloring agents in water or a water-soluble organic solvent containing water and optionally by adding a humectant, a dye-dissolving aid, a mildew-proofing agent, a viscosity modifier, a surface tension modifier or the like thereto.

An aqueous ink containing a pigment as the above-mentioned coloring agent is excellent in water resistance and light fastness, but it causes various problems such as difficulty in dispersibility of a water-insoluble pigment, viscosity increase of an ink, deposition or precipitation of an ink due to change in dispersibility during a long term preservation, occlusion of an orifice or a pen tip, and the like.

Thus, a water-insoluble pigment is hardly usable for an ink of recording system which requires a high reliance.

A method of using a water-soluble dye in dissolved state has been often proposed, for example, in JP-A-3-91577, JP-A-4-279671, JP-A-4-304274, JP-A-6-80916, JP-A-7-26160, JP-A-7-26178, JP-A-7-138492 or JP-B-7-78191, and a part of these methods has been commercialized.

Such known techniques as proposed above employ a strongly dissociative sulfonic acid group in a dye as a coloring agent, thereby making soluble in water or water containing a water-soluble solvent, but images printed with these recording liquids are poor in water resistance and also poor in light fastness because of using an azo type dye which is not a metal complex.

Such prior arts as disclosed in JP-A-5-302047, JP-B-7-76304 and JP-B-7-116394 employ a dye as a coloring agent, which has a strongly dissociative sulfonic acid group within the dye structure as same as the above-mentioned prior techniques, and it is satisfactory in water-solubility and light fastness, but images printed with these recording liquids are poor in water resistance due to the presence of the sulfonic acid group.

Recently, an ink jet recording system wherein image recording is carried out by ejecting a liquid ink through a nozzle, has been largely spread because of enabling image recording on a plain paper, making color printing easily, making printing speed higher and also making the system smaller and lighter. This recording system is preferable also from ecological viewpoint, and an ink used therein is a water-soluble liquid comprising water as the main component, and a dye used therein is an aqueous liquid soluble dye since it can be dissolved easily.

These water-soluble dyes have a high solubility in a water-soluble solvent, and an aqueous solution obtained therefrom maintains a stably and uniformly dissolved state for a long time, and letters or images printed with this aqueous solution ink on a recording material such as plain paper (paper for PPC) are required to have a water-insoluble state, i.e. water resistance. Further, letters and images of printed materials are required to have light fastness since documents must be preserved for a long time. The solubility of these dyes in an aqueous solvent and the water resistance and light fastness of the printed materials are required to be satisfactory also when used for various writing goods.

In order to satisfy all of these properties, many trials have been made, but all of these properties can not be satisfied at present since solubility is contradictory to water resistance and light fastness.

For example, proposals to satisfy a high solubility and a certain degree of water resistance have been made in JP-A-3-52964, JP-A-3-115363, JP-A-3-294367, JP-A-4-202571, JP-A-5-93143, JP-A-5-262998, JP-A-5-271589, JP-A-6-1937, JP-A-6-41460, JP-A-6-73320, JP-A-7-34018 and JP-A-7-62575.

According to these known methods, a trisazo structure having a liner molecular structure is used in order to provide water resistance, and a sulfonic acid group is imparted in order to provide a high concentration solubility in a water-soluble solvent. However, these structures provide a high solubility to a water-soluble solvent, but the water resistance of letters or images printed with a recording liquid containing dyes of these structures is still poor due to a strong dissociation property of the sulfonic acid group, and is unsatisfactory and does not provide a practically satisfactory performance as compared with electrophotographically printed letters or images. Further, light fastness of letters or images printed with the dyes of these structures is also unsatisfactory.

Examples close to the compound of the present invention have been proposed in JP-A-5-302047, JP-B-7-76304 and JP-B-7-116394. Since metal complex compounds used in these known methods are metal azo complex compounds, light fastness is superior to that of a non-metallic azo type compound, but since water-solubility to a water-soluble solvent is provided by incorporating a sulfonic acid group into a structure, water resistance of letters or images printed with a recording liquid containing a dye having such a structure is bad due to the presence of a highly dissociative sulfonic acid group and is not satisfactory for practical use.

A dye used as a coloring agent in a recording liquid is required to have a satisfactory solubility to water or water-containing a water-soluble solvent and a satisfactory long term stability, and letters or images printed with such a recording liquid are required to be water resistant and to have an excellent light fastness.

In view of environmental problems and safety, a solvent used for an ink of an ink jet printer and a recording liquid of various writing goods tends to be water-soluble, and in accordance with this tendency, a dye as a coloring agent for the recording liquid is also demanded to be aqueous liquid soluble and is also demanded to have such a structure as to provide satisfactory water resistance and light fastness.

The present inventors have extensively studied to find a method for satisfying all of these contradictory properties. As this result, the present inventors have found that the following recording liquid satisfies these properties and solves the above-mentioned problems.

That is, the present invention provides a recording liquid containing at least one metal complex compound selected from the group consisting of compounds of the formula (1), 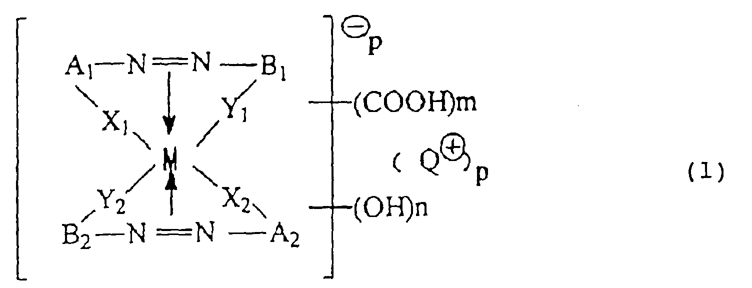 wherein A₁ and A₂ are a substituted or unsubstituted phenyl or naphthyl residue, which may be the same or different, B₁ and B₂ are a substituted or unsubstituted phenyl, naphthyl, pyrazolyl or acetoacetic acid anil residue capable of coupling, which may be the same or different, provided that any of substituents of A₁, A₂, B₁ and B₂ exclude a sulfonic acid group; X₁, X₂, Y₁ and Y₂ are -O-, -COO-, -NR- (in which R is hydrogen or a C₁-C₃ alkyl group) or -S-; m is an integer of from 1 to 6; n is an integer of from 0 to 6; M is Cr, Co, Fe, Ni, Al, Ti or Si; Q is a counter ion; and p is an integer of from 0 to 2.

Hereinafter, the present invention is further explained in more details. The metal complex compound of the present invention in a form of free acid is expressed by the above-mentioned formula (1). It is essential for the compound of the present invention that it is a metal complex compound, that it has at least one carboxyl group as a strong acid group, and that it may have hydroxyl groups. These compounds may be used in a form of free acid, but it is advantageous to use them as alkali metal salts. That is, when these compounds in water or a water-soluble organic solvent alone or a mixture solvent are adjusted to PH 7 to 11 with an alkali metal hydroxide, their solubilities are remarkably increased and a satisfactory concentration necessary for a recording liquid can be attained and a very stable dissolved state can be obtained.

Letters or images printed on paper or fibers with a recording liquid in a solution state in water or a water-soluble organic solvent, become a carboxy-free and phenol-free form on the printed materials, and becomes water-insoluble. Consequently, the printed letters or images do not fade off by a dipping test. This is one of the essential features of the present invention.

Another feature of the compounds of the present invention is that since they are metal complex type azo dyes, they have an excellent light fastness as compared with an azo dye compound which is not a metal complex.

Thus, the compound of the present invention is characterized by having such a structure as to satisfy all of aqueous liquid solubility, water resistance and light fastness.

On the other hand, in the prior art compounds, since a highly dissociative group such as a sulfonic group is present in their structures in order to provide water-solubility to water or a water-soluble organic solvent, the water-solubility is satisfied, but water resistance is very poor since the printed dye is in a form of sulfonate or sulfonate free-form but still strongly dissociative. Consequently, the printed dye images fade off by a dipping test due to its highly dissociative property.

Further, among the prior art compounds, there is an azo dye compound having a carboxyl group and a hydroxy group, and a satisfactory water-solubility and a satisfactory water resistance can be provided by treating them as in the present invention, but light fastness is poor since they are non-metal complex type. Further, in the conventional metal complex type azo dyes, when they have a sulfonic acid group, water resistance is poor, and when they are metal complexes which do not have a carboxyl group or a hydroxy group, water-solubility to water or a water-soluble solvent is very poor and does not provide satisfactory concentration as a recording liquid.

In the compounds of the present invention, it is essential to have a structure having a carboxyl group or a hydroxyl group and to be a metal complex compound. Due to these essential features in their structures, when they are adjusted to pH 7 to 11 in water or an water-soluble solvent with hydroxides of Group 1a and Group 2a elements of the Periodic Table, they provide a high concentration solution, and letters or images printed with such a high concentration recording liquid become free-form and consequently become water-insoluble and provide water resistance. Further, since these azo compounds are metal complex compounds, they provide excellent light fastness. Thus, the recording liquid of the present invention provides a good aqueous liquid solubility, and the letters or images recorded therewith are excellent in water resistance and light fastness.

Hereinafter, the recording liquid of the present invention is further illustrated in more details. The recording liquid comprises a dye of the formula (1) and water or a water-soluble organic solvent mixed with water, as constituents. Examples of the water-soluble organic solvents include C₁-C₄ alkanols such as methanol, ethanol, n-propanol, isopropanol, n-butanol, sec-butanol, tert-butanol, isobutanol and benzyl alcohol; amides such as dimethylformamide and diethylformamide; ketones or ketones or ketone alcohols such as acetone and diacetone alcohol; ethers such as tetrahydrofuran and dioxane; polyalkylene glycols such as polyethylene glycol and polypropylene glycol; alkylene glycols having a C₂-C₆ alkylene, thioglycols and their alkyl ethers, such as ethylene glycol, propylene glycol, butylene glycol, triethylene glycol, thiodiglycol, hexylene glycol, diethylene glycol and diethylene glycol monobutyl ether; other polyols such as glycerol and 1,2,6-hexanetriol; lower alkyl ethers of polyhydric alcohols such as 2-(2-methoxyepoxy)ethanol, 2-ethoxyethanol, 2-(2-ethoxyethoxy)ethanol, 2-[2-(2-methoxyethoxy)ethoxy]ethanol and 2-[2-(2-ethoxyethoxy)ethoxy]ethanol; alkanolamines such as monoethanolamine, diethanolamine and triethanolamine; nitrogen-containing heterocyclic ketones such as 2-pyrrolidone, N-methyl-2-pyrrolidone, N-ethyl-2-pyrrolidone, N-vinylpyrrolidone, N-octyl-2-pyrrolidone, N-(2-hydroxyethyl)-2-pyrrolidone, N-cyclohexyl-2-pyrrolidone, N-dodecyl-2-pyrrolidone, N-isopropyl-2-pyrrolidone, N-n-butyl-2-pyrrolidone, N-tert-butyl-2-pyrrolidone, N-(3-hydroxypropyl)-2-pyrrolidone, N-(3-hydroxypropyl)-2-pyrrolidone, N-(2-methoxyethyl)-2-pyrrolidone, N-(3-methoxypropyl)-2-pyrrolidone, N-benzyl-2-pyrrolidone, polyvinylpyrrolidone and 1,3-dimethyl-2-imidazolidinone; and the like. These water-soluble organic solvents are used respectively alone or in a mixture of two or more so long as they do not adversely affect each other.

In addition to a dye, water and a water-soluble organic solvent which are the main components of the recording liquid, there may be optionally incorporated a permeability-imparting agent such as ethers including an ethylene oxide adduct of a higher alcohol, an ethylene oxide adduct of an alkylphenol, an ethylene oxide-propylene oxide copolymer, an ethylene oxide adduct of acetylene glycol, THF, dioxane or the like; and lower alkyl ethers of polyhydric alcohols including ethylene glycol methyl ether, diethylene glycol monomethyl ether, triethylene glycol monomethyl ether or the like.

Further, there may be optionally incorporated other various additives such as a viscosity modifier, a pH modifier, a rot-proofing agent, a mildew-proofing agent, an antioxidant, a surface tension modifier, an evaporation promoter, an aqueous rosin, a bleeding-proofing agent such as an acryl copolymer, and the like.

Further, the present inventors have found that the following compound of the formula (2) is novel and can be used quite satisfactorily for a recording liquid.

Thus, the present invention further provides a metal complex compound of the formula (2), 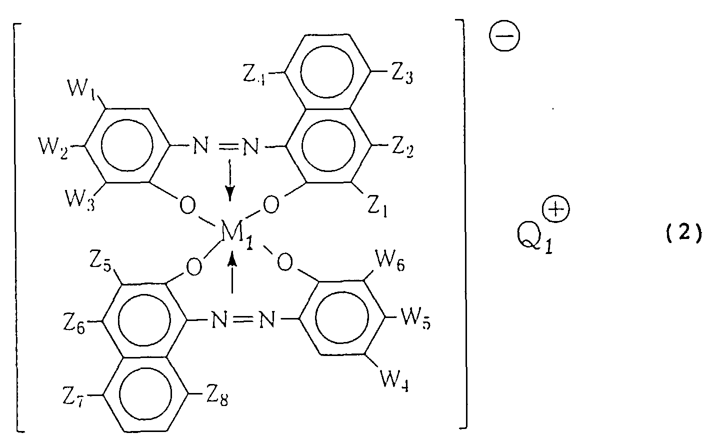 wherein W₁, W₂, W₃, W₄, W₅, W₆, Z₁, Z₄, Z₅ and Z₈ are independently a hydrogen atom, a halogen atom, a nitro group, a methylsulfonyl group, a trifluoromethyl group, a hydroxyl group, a carboxyl group, a C₁-C₈ alkyl group, a C₁-C₅ alkoxy group, a C₁-C₅ alkoxycarbonyl group, an acetyl group, an amino group, a C₁-C₈ alkylamino group, an acetylamino group, a sulfamoyl group which may have a substituent or a carbamoyl group which may have a substituent; either Z₂ or Z₃ is a phenylazo group which may have a substituent, a naphthylazo group which may have a substituent or a carbamoyl group which may have a substituent, and the other is a hydrogen atom; either Z₆ or Z₇ is a phenylazo group which may have a substituent, a naphthylazo group which may have a substituent or a carbamoyl group which may have a substituent, and the other is a hydrogen atom; provided that at least one of W₁, W₂, W₃, W₄, W₅, W₆, Z₁, Z₂, Z₃, Z₄, Z₅ and Z₆ has a hydroxyl group or a carboxyl group in a form of an organic acid; Q₁ is a hydrogen, sodium, potassium, lithium or ammonium ion; and M₁ is an iron, chromium or cobalt atom.

The compound of the formula (2) is a novel metal azo type complex compound which can be used for various water-soluble recording liquids and can solve completely all of the above-mentioned problems.

The compound of the formula (2) does not contain a sulfonic acid group in the molecule, but contains a hydroxyl group and/or a carboxyl group and has a 1:2 type iron, cobalt or chromium as a bonding metal.

The compound of the formula (2) of the present invention can be obtained by reacting an azo compound of the formula (3) and an azo compound of the formula (4), 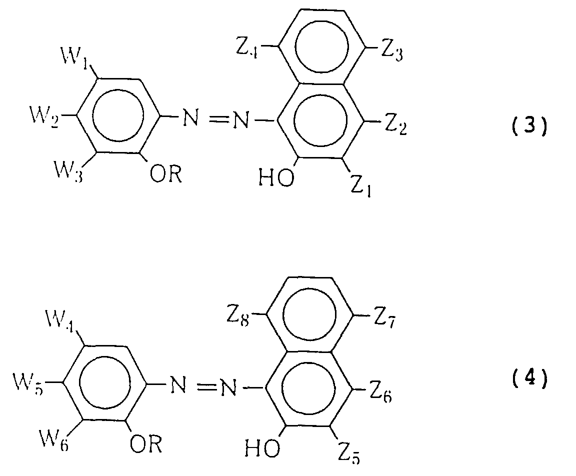 (wherein in the above formulas (3) and (4), W₁, W₂, W₃, W₄, W₅, W₆, Z₁, Z₂, Z₃, Z₄, Z₅, Z₆, Z₇ and Z₈ are as defined above, and R is a hydrogen atom or a methyl group) in water with a metal-imparting agent in the presence of heat at pH 4 to 7 optionally in the presence of an alkali metal hydroxide.

The metal complex compound of the formula (2) of the present invention provides excellent heat resistance and light fastness.

Further, since the metal complex compound of the formula (2) has a carboxyl group as a dissociative group, it does not have a solubility to a water-soluble solvent in such an acidic state as less than pH 7, and intermediates or inorganic salts in the preparation can be easily removed by washing with water, thereby providing a remarkably pure product.

Still further, the compound of the formula (2) of the present invention can be formed into an aqueous recording liquid by making pH 7 to 10 with a metal hydroxide, which is a high concentration uniform solution. This is one of the essential features of the present invention.

### EXAMPLES

Now, the present invention will be described in further detail with reference to Examples. However, it should be understood that the present invention is by no means restricted to such specific Examples.

In the Examples, "part" means "part by weight".

### EXAMPLE 1

Iron complex azo compound in a form of free acid expressed by the following formula (5):

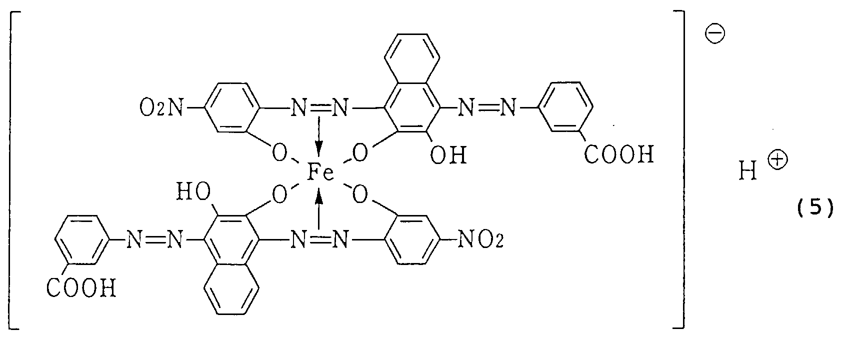

| | |
|---|---|
| The above iron complex azo compound | 5 parts |
| N-methyl-2-pyrrolidone | 25 parts |
| Ion-exchanged water | 70 parts |
| Sodium dehydroacetate | 0.01 part |

Lithium hydroxide aqueous solution was added to the above composition to make pH 9.0, and the resultant mixture was dissolved under stirring and was filtrated through a Teflon filter having a pore diameter of 0.33 µm to obtain a recording liquid.

By using the recording liquid thus obtained, ink jet recording was carried out on a commercially available plain paper (paper for PPC) by means of a recording device having an Ondemand type recording head to eject the recording liquid by a piezo-vibrator. Even when the recording was carried out for a long time, a nozzle was not occluded, and an image obtained thereby was a satisfactory black image excellent in water resistance, light fastness and density.

In order to make comparison with the printed image material obtained in Example 1, the following comparative compound A (compound disclosed in Example 1 of JP-A-7-138492)

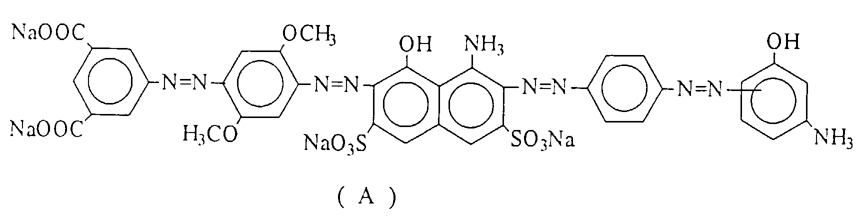

### Comparative compound B (compound disclosed in Preparation Example 1 of JP-B-7-116394)

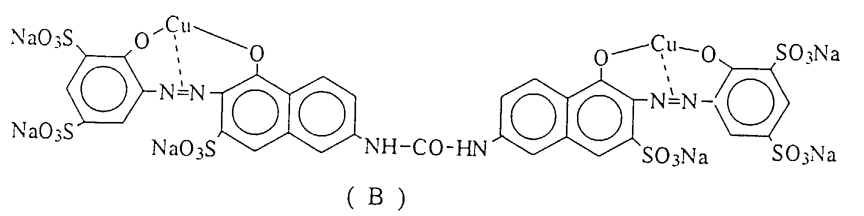

### Comparative compound C (compound disclosed in Preparation Example 2 of JP-B-7-116394)

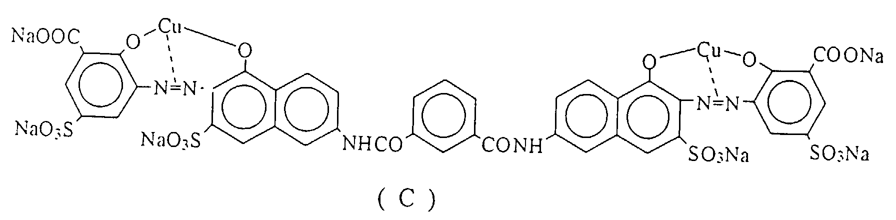

were used respectively in place of the metal complex compound of Example 1 to obtain comparative recording liquids and to carry out ink jet recording on plain papers in the same manner as in Example 1. The printed image materials thus obtained were subjected to the following water resistance and light fastness tests. Water resistance test

Each test sample obtained above was dried in air for one week, and was measured with regard to a printed image density by a reflection densitometer (Macbeth RD-918). Thereafter, each sample was dipped in ion-exchanged water at 25°C for 1 hour, and was dried in air for 2 hours, and was measured again with regard to a printed image density to measure a remaining rate of the printed image density. Light fastness test

Each test sample obtained above was dried in air for one week, and was measured with regard to a light fastness by JIS L0842 carbon arc light method.

The test results are shown in the following Table 3.

**Table 3**

| | Water resistance (remaining rate %) | Light resistance (grade) |
|---|---|---|
| Recording liquid containing iron complex compound (5) of Example 1 of the present invention | 98 | 7 |
| Recording liquid containing comparative compound (A) | 35 | 3 |
| Recording liquid containing comparative compound (B) | 23 | 4 |
| Recording liquid containing comparative compound (C) | 34 | 3 |

### EXAMPLE 2

Compound (6) in a form of free acid:

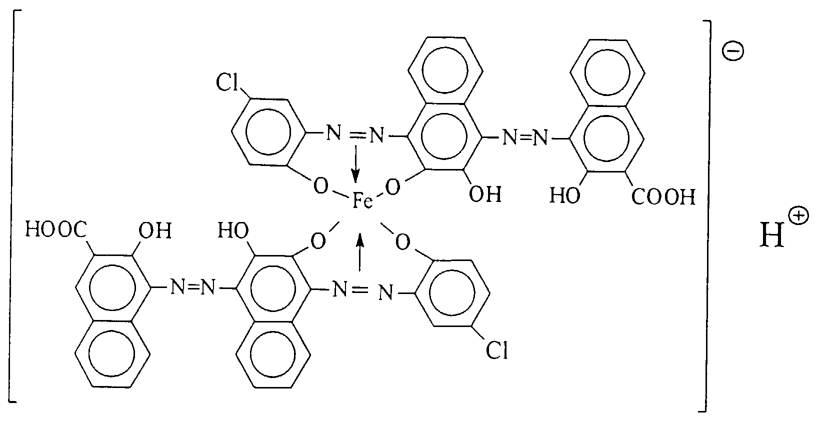

| | |
|---|---|
| The above iron complex compound (6) | 7 parts |
| N-methyl-2-pyrrolidone | 25 parts |
| Sodium dehydroacetate | 0.01 part |
| Ion-exchanged water | 68 parts |

The above composition was treated in the same manner as in Example 1 to obtain a recording liquid. By using the recording liquid thus obtained, ink jet recording was carried out on a commercially available plain paper (paper for PPC) by means of a recording device having an Ondemand type recording head to eject the recording liquid. An image obtained was a satisfactory black image excellent in water resistance, light fastness.

The above obtained recording liquid provided satisfactory results in respect to water resistance, light fastness when used as an ink for writing goods such as an aqueous ball-point pen or a sign pen.

In order to make comparison with a printed image material obtained in Example 2, the above-mentioned comparative compounds A, B and C were used to prepare respective recording liquids in the same manner as in Example 2, and by using the recording liquids thus obtained, ink jet recording was carried out respectively on plain papers. Water resistance and light fastness tests were carried out in the same manner as in Example 1, and the results are shown in the following Table 4.

**Table 4**

| | Water resistance (remaining rate %) | Light resistance (grade) |
|---|---|---|
| Recording liquid containing iron complex compound (6) of Example 2 of the present invention | 99 | 7 |
| Recording liquid containing comparative compound (A) | 35 | 3 |
| Recording liquid containing comparative compound (B) | 23 | 4 |
| Recording liquid containing comparative compound (C) | 34 | 3 |

Hereinafter, the structures of various compounds expressed by the formula (1) used in the present invention to prepare recording liquids are illustrated in the following Table 5. By using these compounds in place of the iron complex azo compound (5) of Example 1, recording liquids were prepared in the same manner as in Example 1, and were proved to have excellent water resistance and light fastness in the same manner as in Example 1.

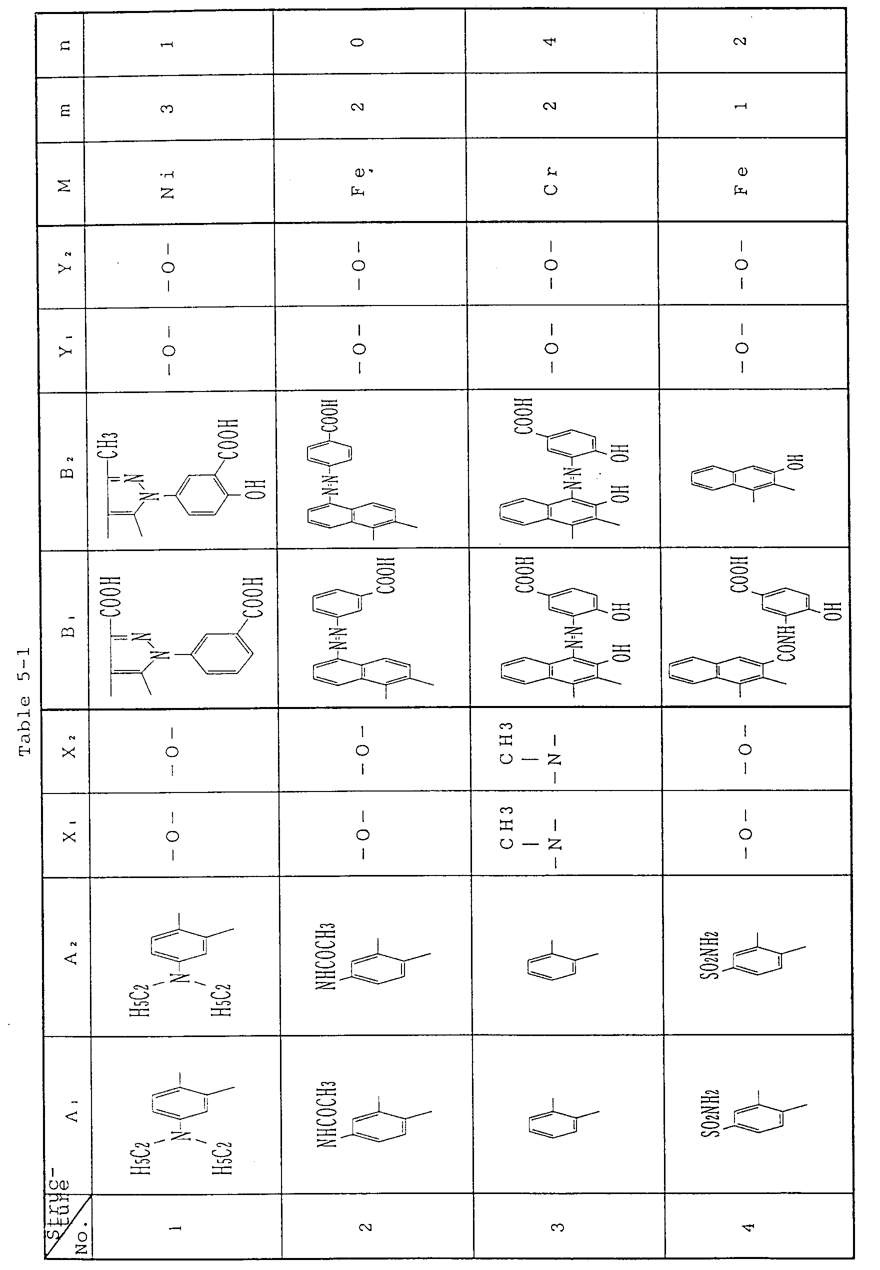

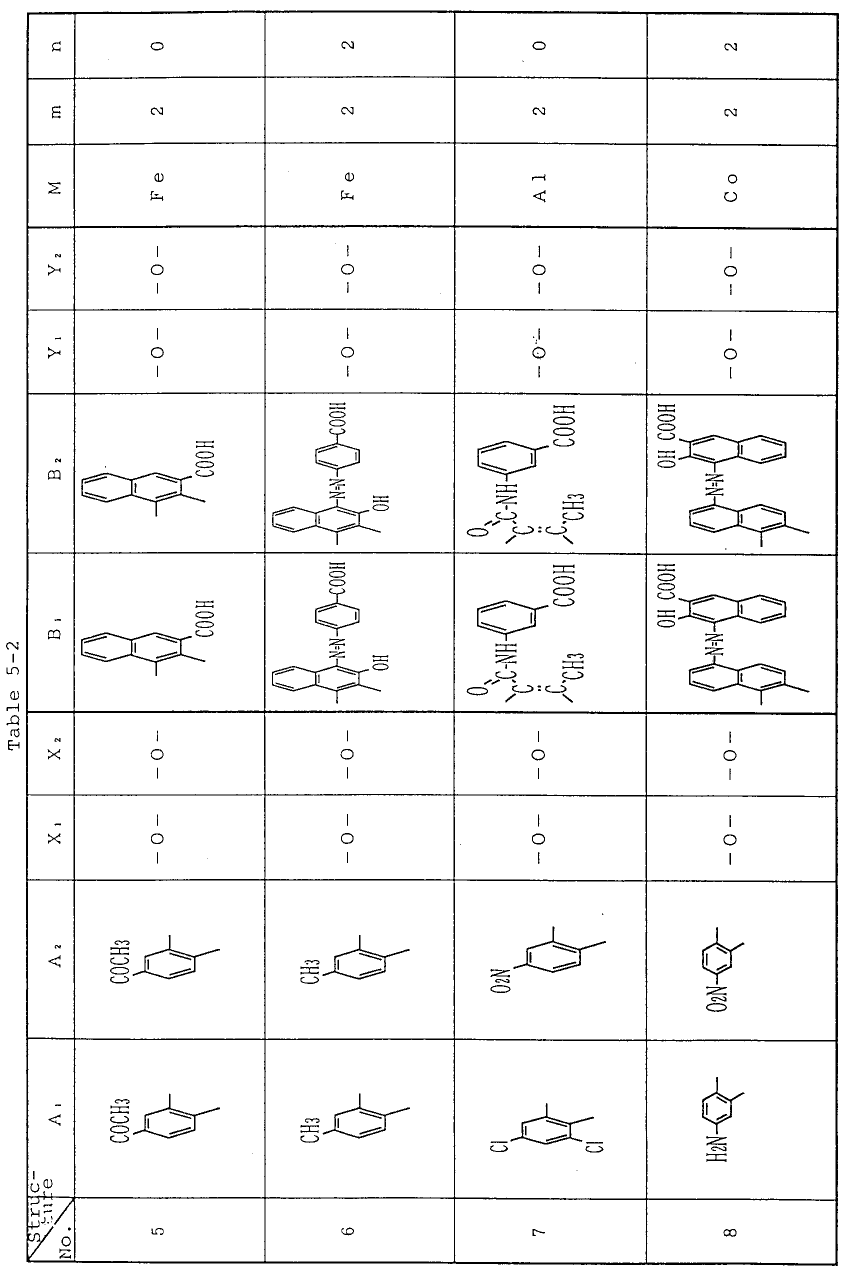

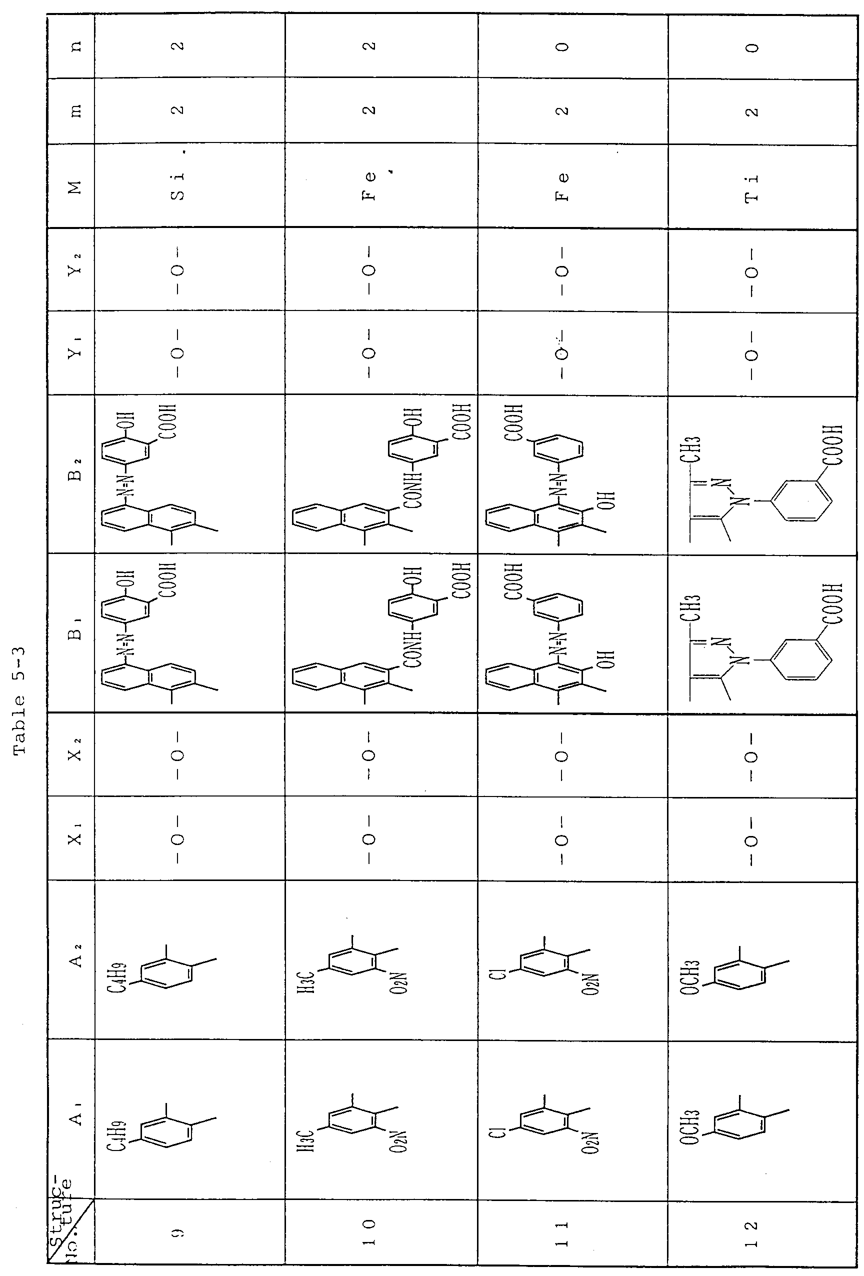

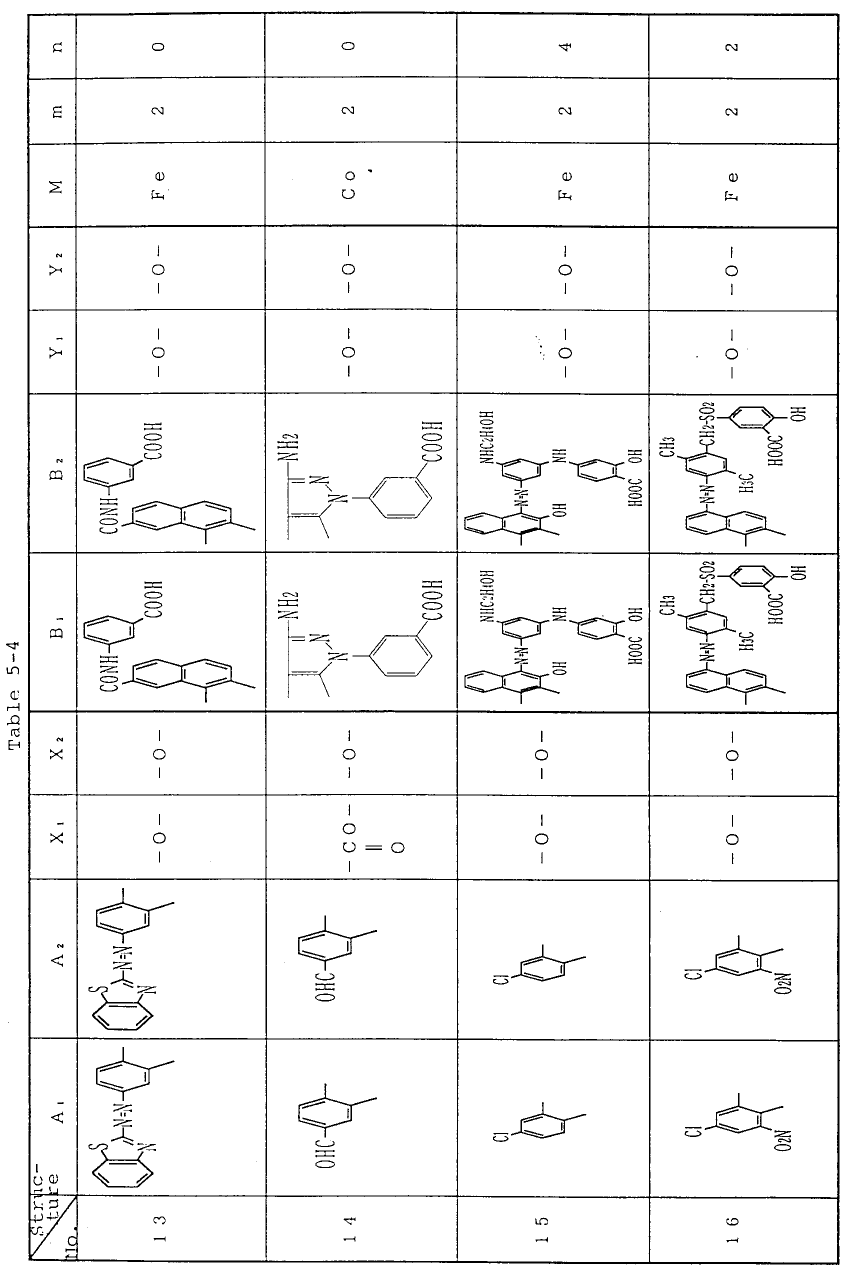

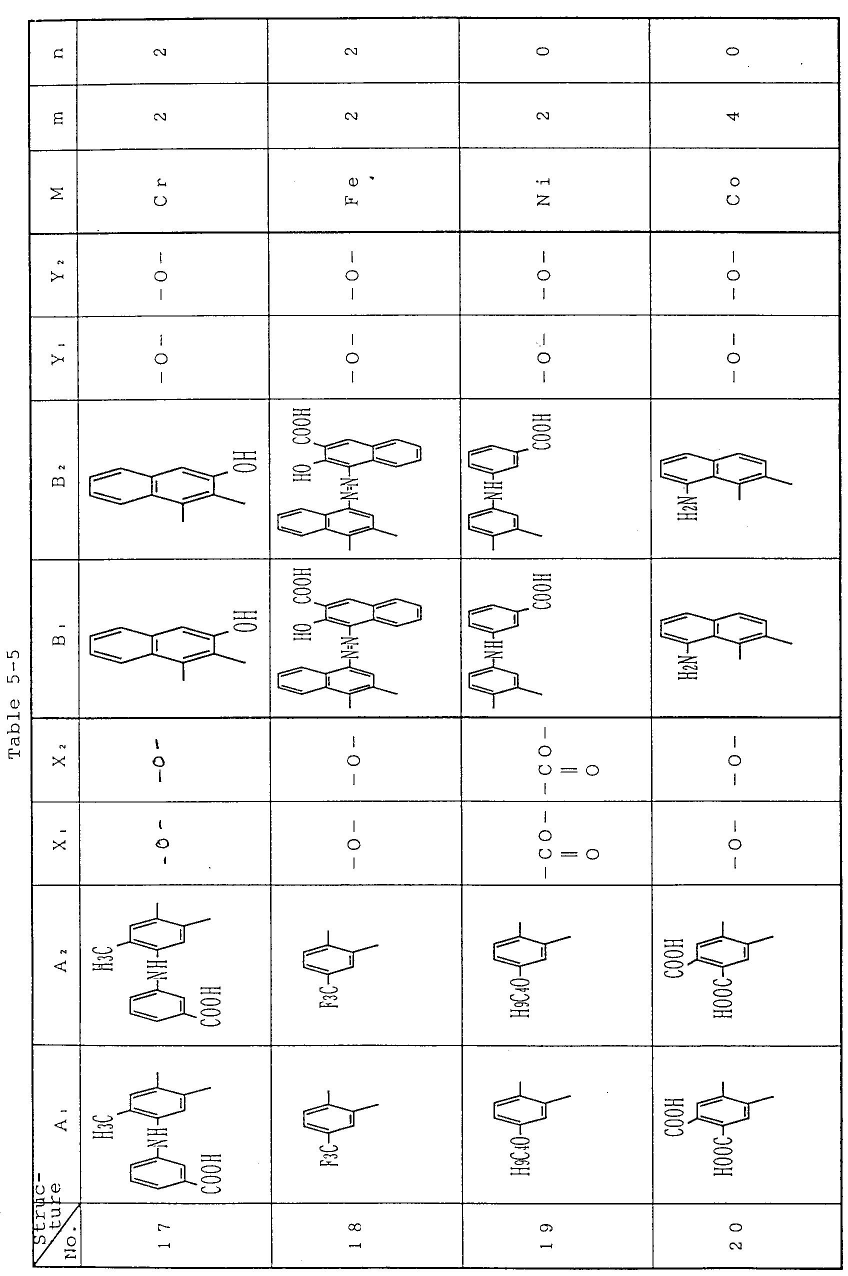

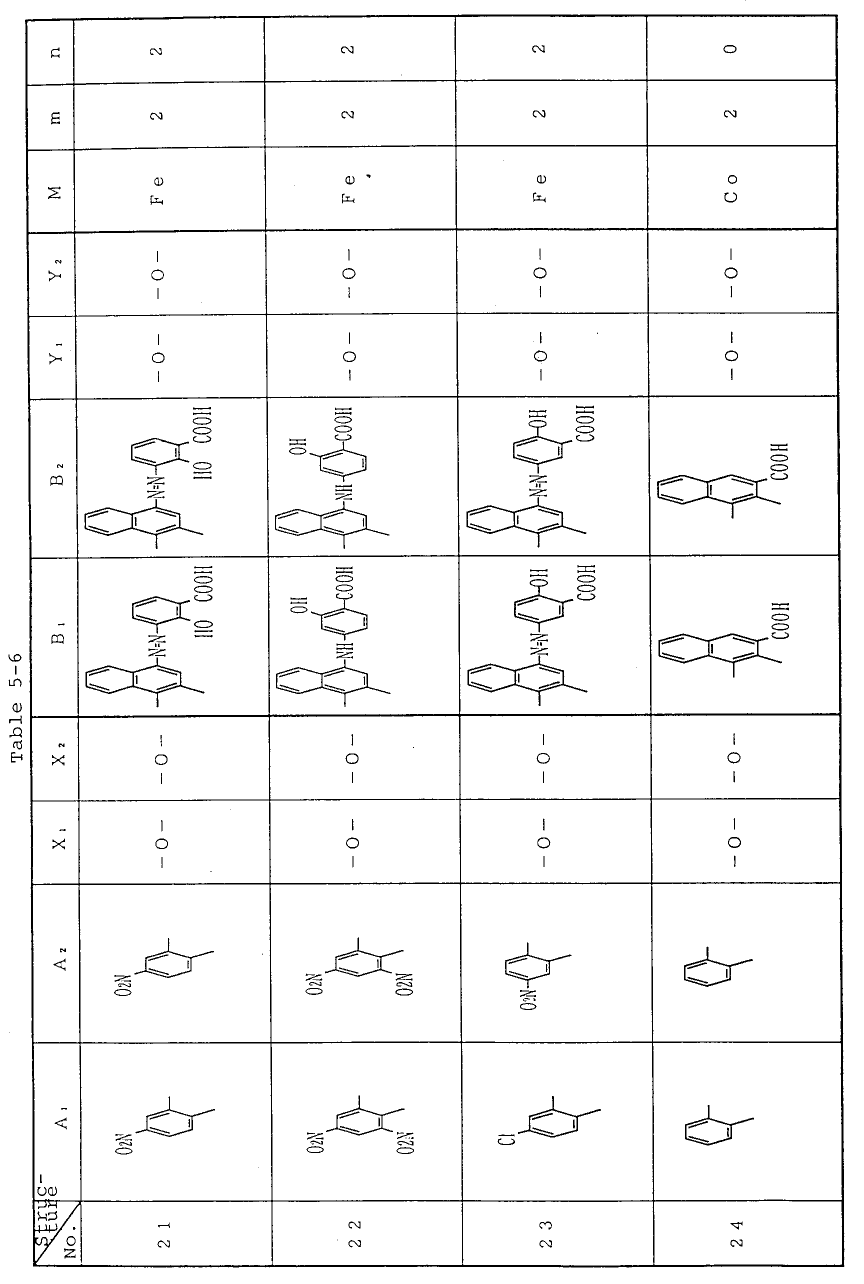

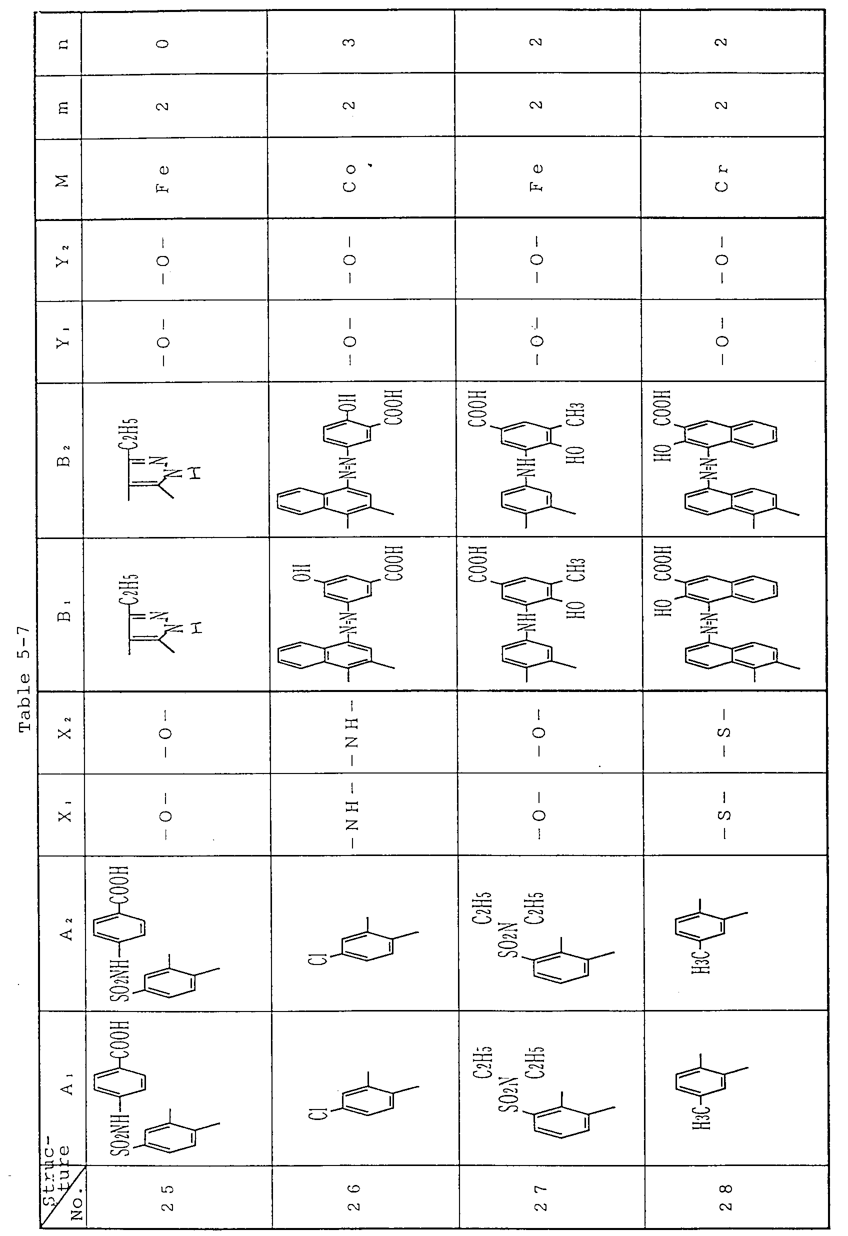

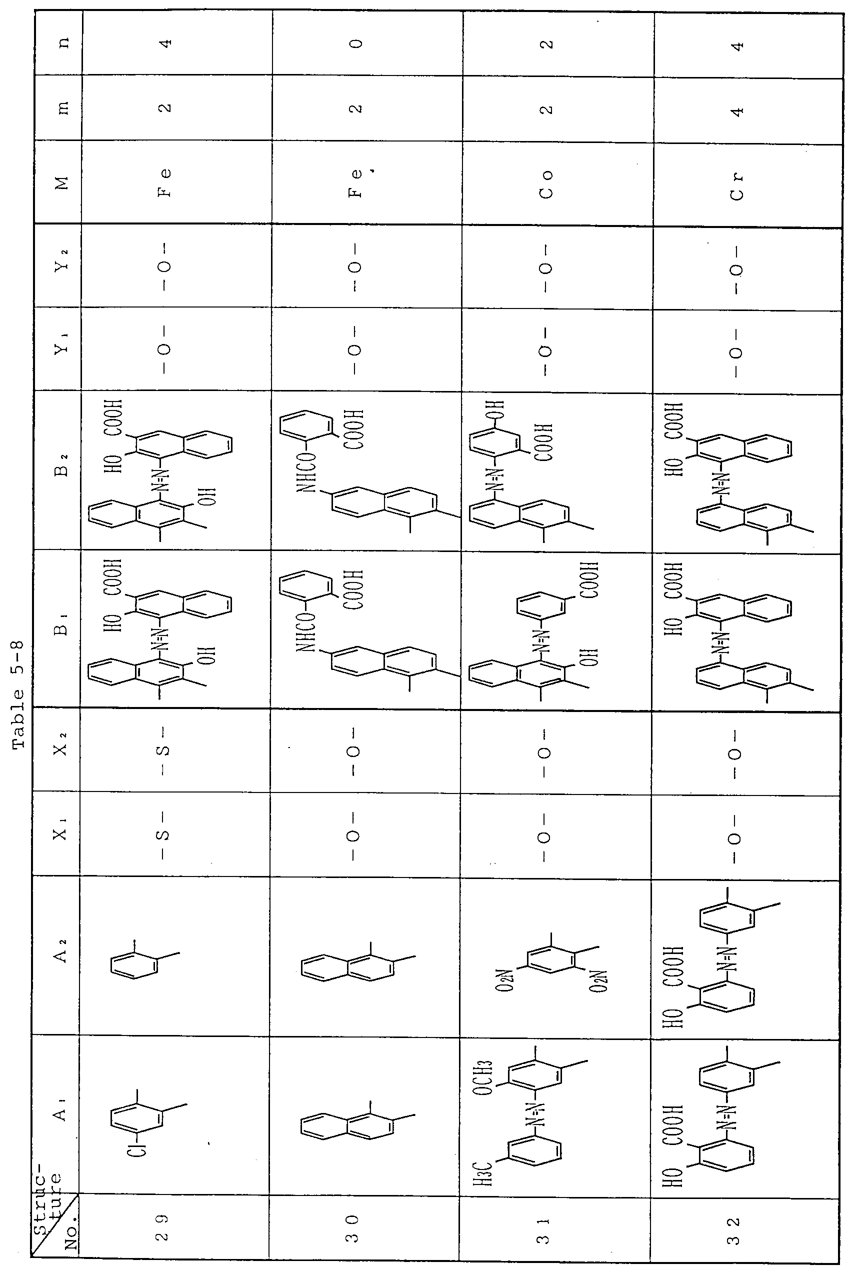

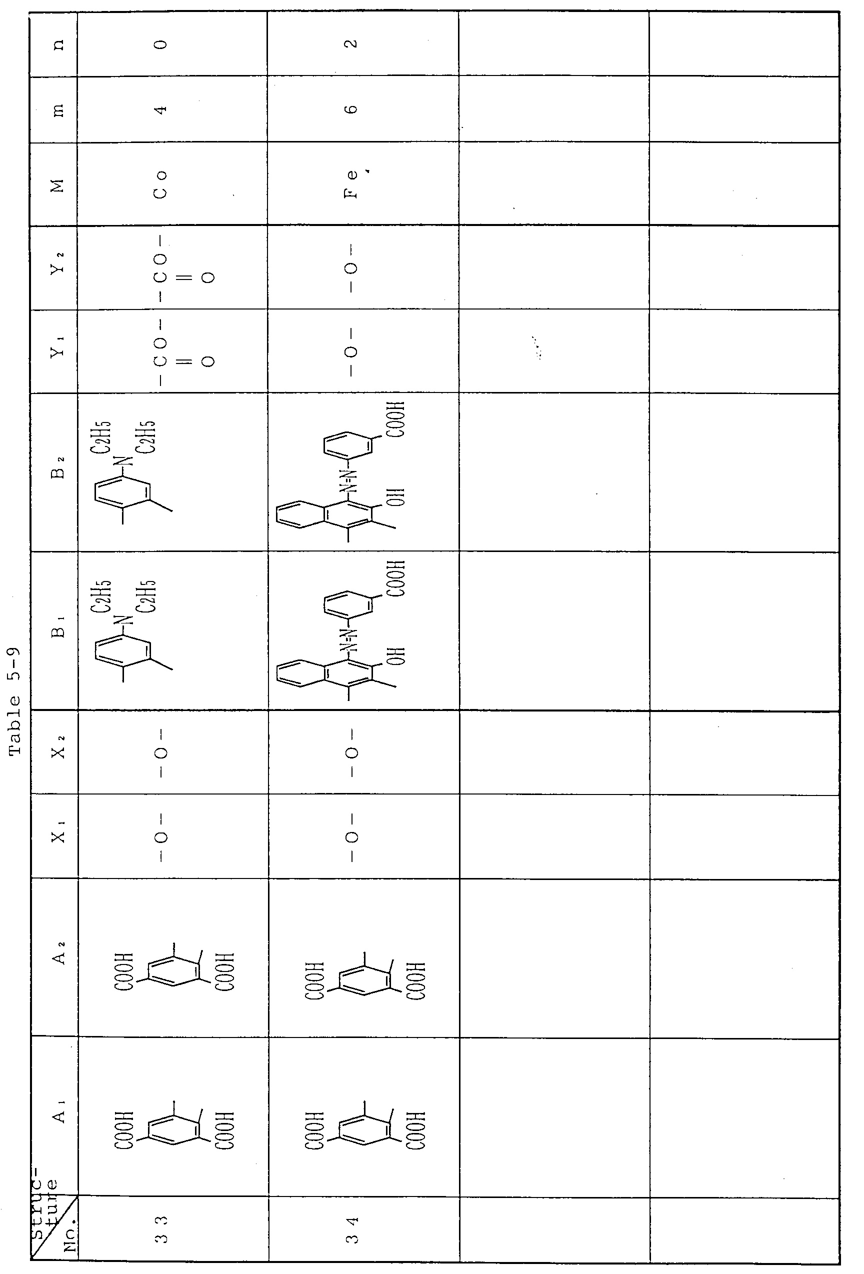

### EXAMPLE 3

14.4 Parts of 4-chloro-2-aminophenol was dissolved in a mixture of 100 parts of water and 20 parts of 35% hydrochloric acid, and was then cooled to 0 to 5°C, and 7 parts of sodium nitrite was slowly added thereto to cause diazotization.

On the other hand, 31 parts of 2-hydroxy-5-(4-hydroxy-5-carboxyphenylazo)naphthalene was dissolved in a mixture of 500 parts of water and 12 parts of sodium hydroxide, and the above obtained diazotized solution was slowly added to the solution thus obtained at 0 to 5°C to cause coupling. After finishing the coupling reaction, the reaction solution was adjusted to pH 5 by hydrochloric acid to precipitate a reaction product. The product thus precipitated was filtrated and washed with water to obtain a wet cake containing 46 parts of a black brown disazo compound expressed by the following chemical formula (7).

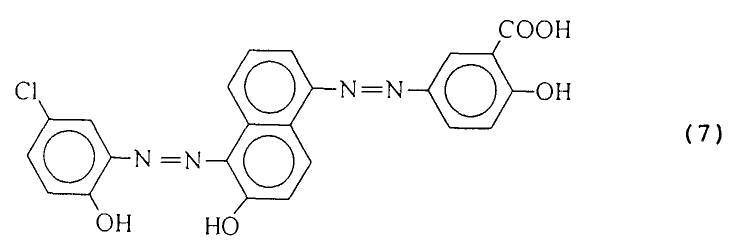

Thereafter, to the wet cake containing the disazo compound (7), were added 400 parts of water and 10 parts of sodium hydroxide, and 80 parts of 10% ferric chloride aqueous solution was added thereto under stirring, and reaction was conducted at 85 to 95°C for 2 hours to obtain 48 parts of a crystal. The crystal thus obtained had a black outer appearance, and was expressed by the following chemical formula (8), 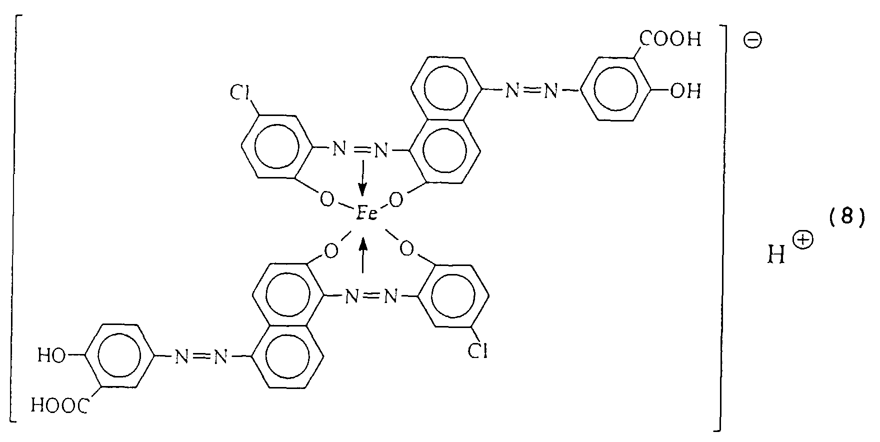 and λmax in an alcohol solution was 560 nm, and the liquid color was black brown.

The elemental analysis values of the compound thus obtained are shown in the following Table 6.

**Table 6**

| | C | H | N | Cl | Fe |
|---|---|---|---|---|---|
| Measured value (%) | 56.1 | 2.8 | 11.4 | 7.1 | 5.7 |
| Theoretical value (%) | 56.5 | 2.7 | 11.5 | 7.2 | 5.7 |

### EXAMPLE 4

14 Parts of 4-nitro-2-aminophenol was dissolved in 100 parts of water and 20 parts of 35% hydrochloric acid, and was cooled to 0 to 5°C, and 7 parts of sodium nitrite was slowly added thereto to cause diazotization. On the other hand, 37.4 parts of 2,3-dihydroxy-4-(2-hydroxy-3-carboxynaphthylazo)naphthalene was dissolved in 500 parts of water and 12 parts of sodium hydroxide, and the above prepared diazotized solution was slowly added to this solution at 0 to 5°C to cause coupling reaction. After finishing the coupling reaction, the reaction solution was adjusted to pH 4 with hydrochloric acid to precipitate a reaction product. The product thus precipitated was filtrated and washed with water to obtain a wet cake containing 53 parts of disazo compound expressed by the formula (9).

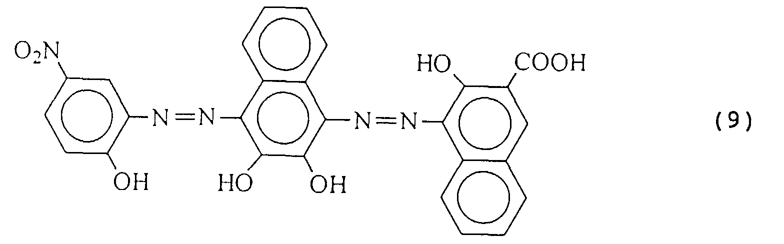

To the wet cake containing the disazo compound (9), were added 500 parts of water and 8 parts of sodium hydroxide, and 80 parts of 10% ferric chloride aqueous solution was added thereto under stirring, and reaction was carried out at 85 to 95°C for 2 hours to obtain 57 parts of a crystal. The crystal thus obtained had a black outer appearance, and had a structure as expressed by the following chemical formula (10), and λmax in alcohol solution was 562 nm.

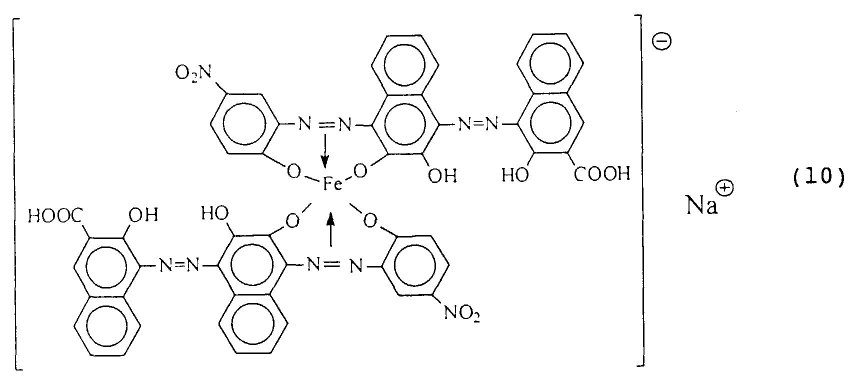

The elemental analysis values of this compound are shown in the following Table 7.

**Table 7**

| | C | H | N | Fe | Na |
|---|---|---|---|---|---|
| Measured value (%) | 56.1 | 2.6 | 12.1 | 4.7 | 2.1 |
| Theoretical value (%) | 56.2 | 2.6 | 12.1 | 4.8 | 2.0 |

### EXAMPLE 5

A disazo compound expressed by the following chemical formula (11) was prepared in the same manner as in Example 4.

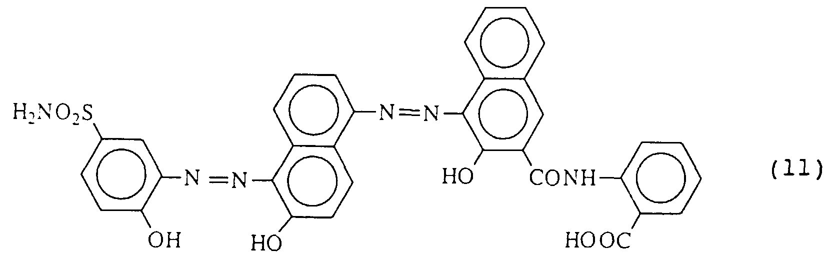

Thereafter, by using the disazo compound of the formula (11), an iron complex compound expressed by the following formula (12) was prepared in the same manner as in Example 3.

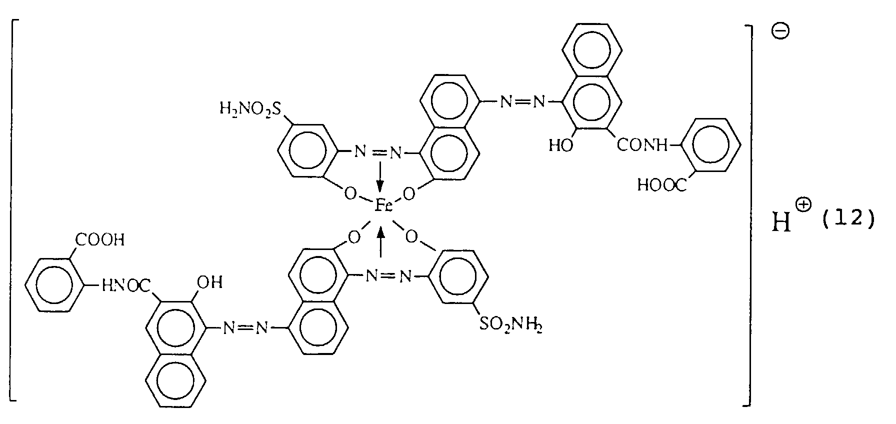

λmax of this product in alcohol solution was 553 nm. The elemental analysis values of this product are shown in the following Table 8.

**Table 8**

| | C | H | N | S | Fe |
|---|---|---|---|---|---|
| Measured value (%) | 56.3 | 3.28 | 12.3 | 4.6 | 4.1 |
| Theoretical value (%) | 56.8 | 3.25 | 12.4 | 4.7 | 4.1 |

### EXAMPLE 6

Various metal complex compounds prepared in accordance with Example 3, 4 or 5 are illustrated in the following Table 9.

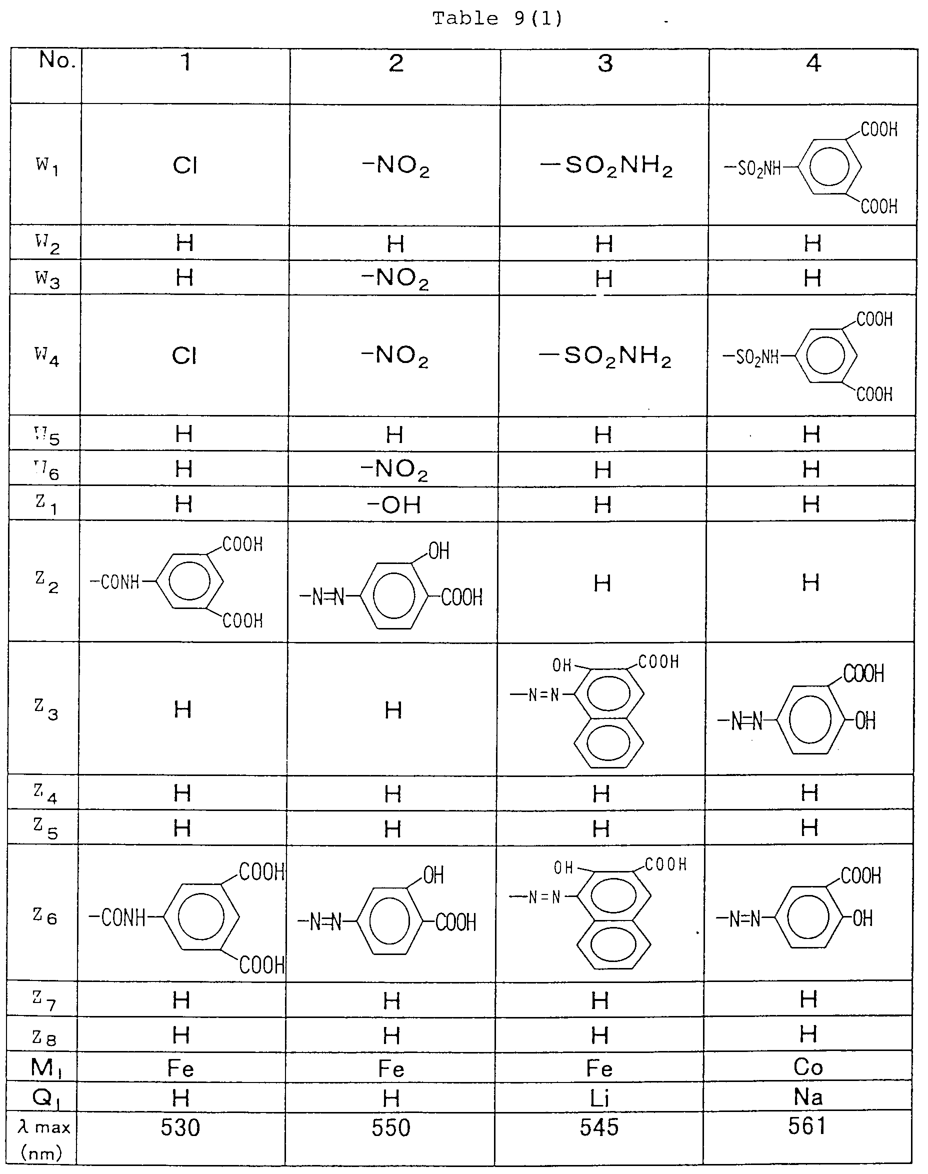

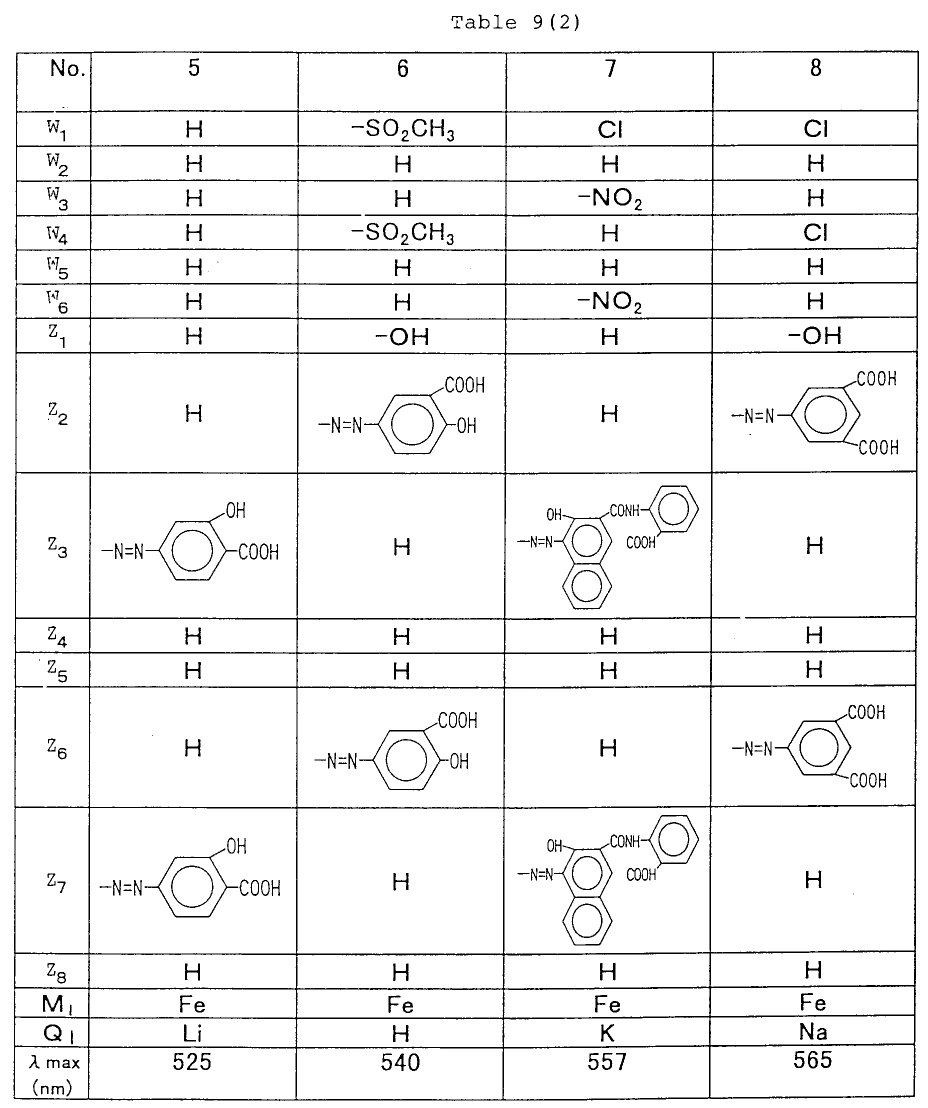

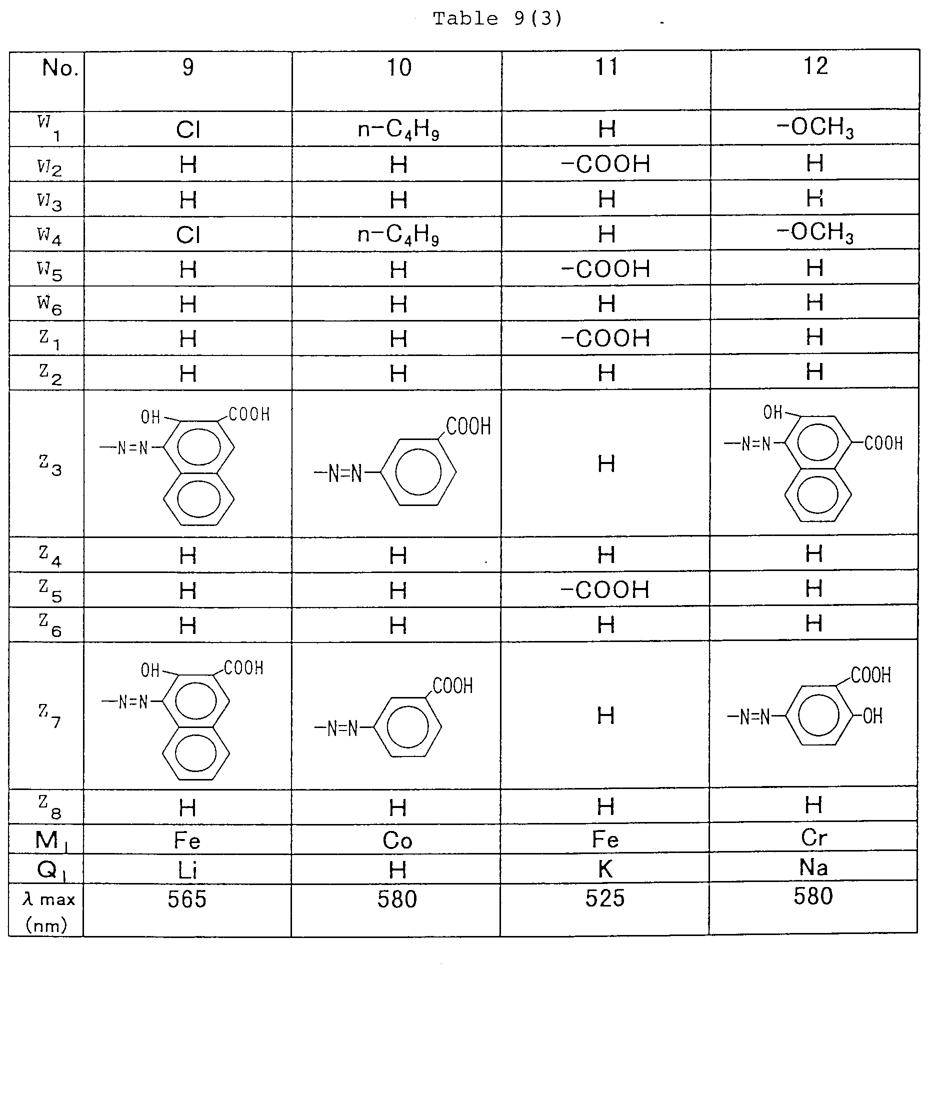

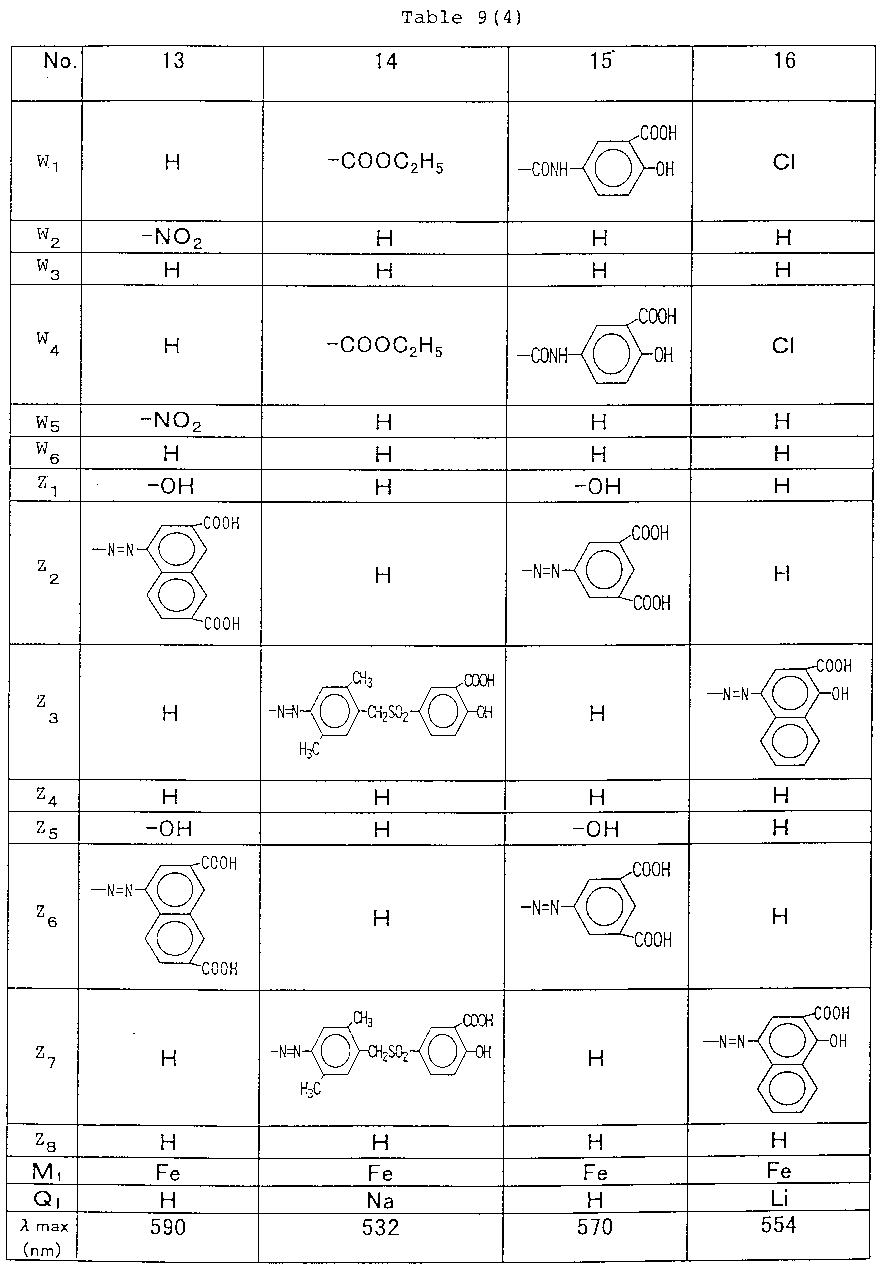

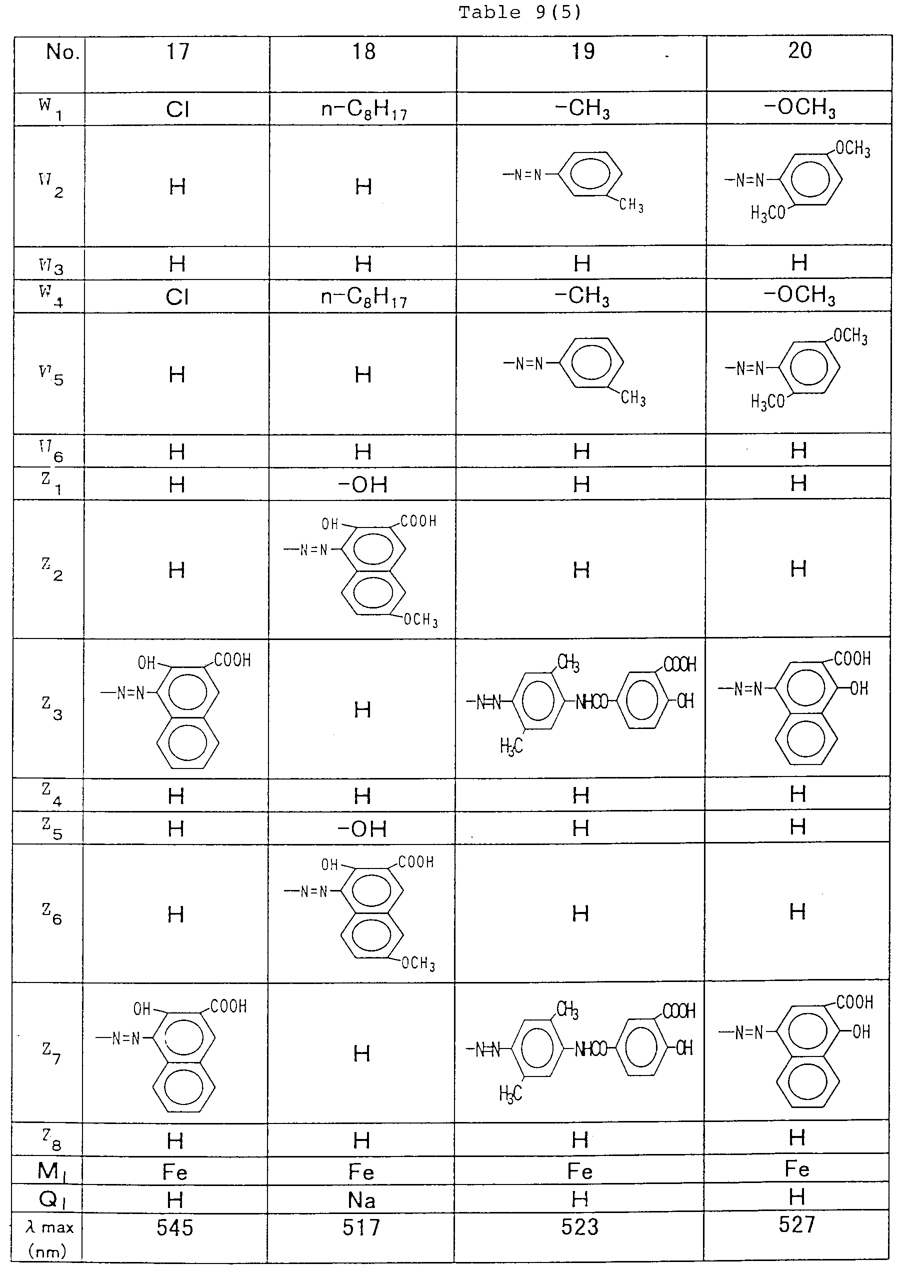

### APPLICATION EXAMPLE

| | |
|---|---|
| Compound of formula (10) of Example 3 | 5 parts |
| N-methyl-2-pyrrolidone | 25 parts |
| Sodium dehydroacetate | 0.01 part |
| Ion-exchanged water | 70 parts |

The above composition was adjusted to pH 9.0 with a lithium hydroxide aqueous solution, and was dissolved under stirring, and was filtrated through a Teflon filter having a pore diameter of 0.33 µm to prepare a recording liquid.

On the other hand, compound (13) of the following structural formula was used to prepare a comparative recording liquid in the same manner as above.

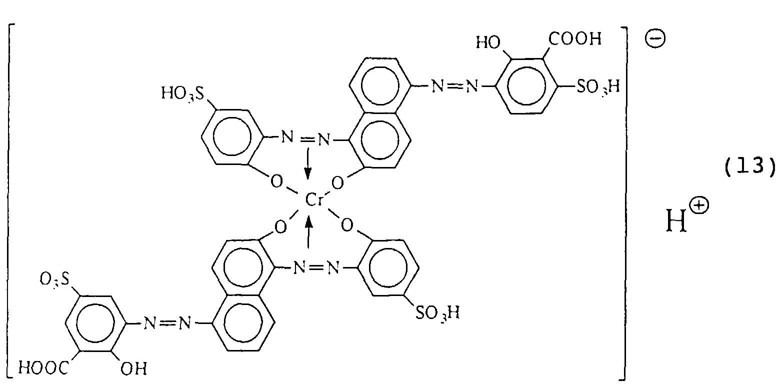

The recording liquids thus obtained were respectively tested as an ink for a sign pen and an ink for ink jet recording.

An image printed with the recording liquid containing the compound (10) of the present invention was not blurred or moved with water in the water resistance test by flowing water method and was proved to have an excellent water resistance. On the other hand, an image printed with the comparative recording liquid containing the comparative compound (13) was washed out by the flowing water test and became completely illegible.

### EXAMPLE 7

14 Parts of 2-amino-4-chlorophenol was dissolved in 100 parts of water and 20 parts of 35% hydrochloric acid, and was cooled to 0 to 5°C, and 7 parts of sodium nitrite was slowly added thereto to cause diazotization.

On the other hand, 34 parts of 2-hydroxy-5-(3-hydroxy-4-carboxyphenylazo)-8-aminonaphthalene was dissolved in 500 parts of water and 14 parts of sodium hydroxide, and the above prepared diazotized solution was slowly added to this solution at 0 to 5°C to cause coupling reaction.

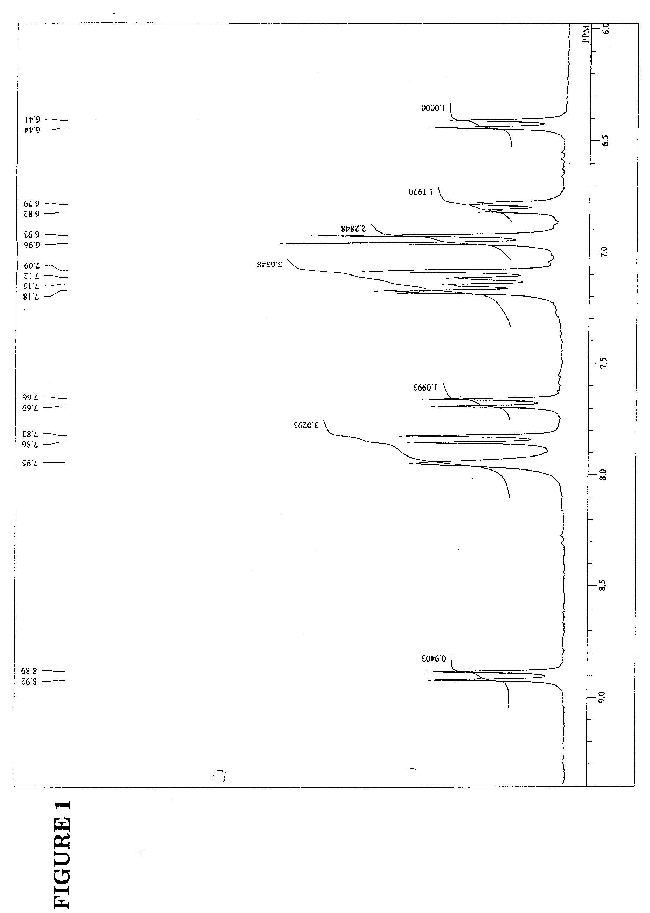

After finishing the coupling reaction, the reaction solution was adjusted to pH 5 with hydrochloric acid to precipitate a reaction product. The reaction product thus precipitated was filtrated and washed with water to obtain a wet cake containing 65 parts of a black brown disazo compound. The disazo compound thus obtained was identified to have the following chemical formula (14) by PMR and CMR analyses. 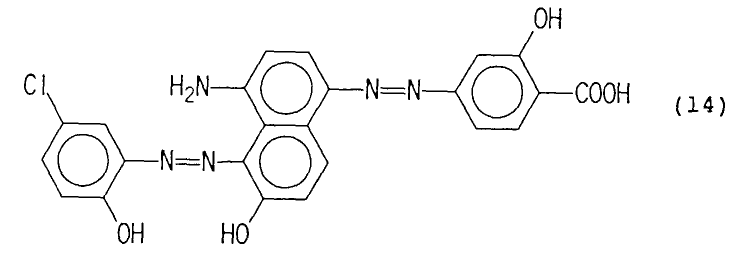 The PMR chart (solvent: DMSO-d6, measurement temperature: 79.6°C) is shown in the attached Figure 1. Chemical shift values of 23 carbon atoms according to the CMR analysis are illustrated below.

Chemical shift values: 108.0, 110.1, 111.3, 112.2, 112.6, 114.1, 114.4, 120.9, 122.1, 125.7, 127.4, 127.8, 130.0, 131.3, 132.2, 138.0, 149.0, 155.1, 162.6, 163.1, 170.2, 170.7, 195.5

The wet cake containing the disazo compound (14) was added to 500 parts of water and 6 parts of sodium hydroxide and was dispersed therein, and 8 parts of ferric chloride was added to the resultant mixture, and the mixture was heated to 80°C, and 8 parts of sodium hydrogencarbonate was added to the mixture under stirring, and the resultant mixture was reacted for 3 hours to obtain 43 parts of a solid product. The solid product thus obtained had a black outer appearance, and was identified to have the following chemical formula (15) by elemental analysis of iron.

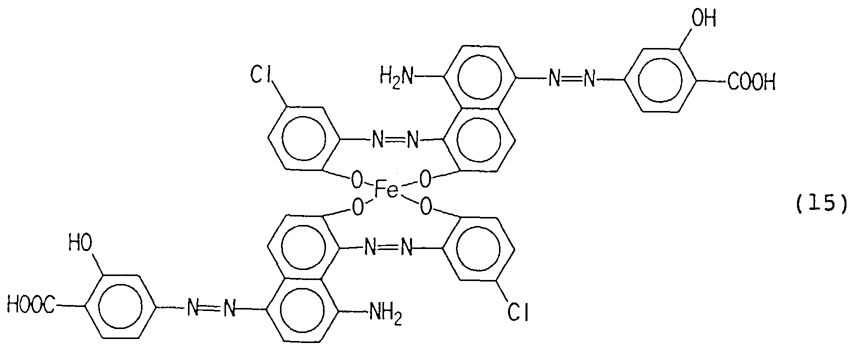

The elemental analysis value of iron of this compound is illustrated in the following Table 10.

**Table 10**

| | Measured value (%) | Theoretical value (%) |
|---|---|---|
| Fe | 5.56 | 5.55 |

According to the present invention, by adding a carboxyl group and a hydroxyl group, an azo dye compound is improved in respect of aqueous liquid solubility to water or an aqueous solvent containing water at pH 7 to 11 and water resistance of a recording liquid, and further by making a metal complex, light fastness is improved.

A dye for a water-soluble recording liquid usable as an ink for an ink jet printer and an ink for various writing goods such as a ball-point pen or a sign pen, is demanded to have an aqueous liquid solubility in water and an aqueous solvent, and also its printed image is demanded to be satisfactory in respect to water resistance and light fastness. However, heretofore, a dye having a high water-solubility has been poor in water resistance, and there has been no dye for an aqueous recording liquid satisfactory for both water resistance and light fastness. According to the present invention, there has been provided a dye for an aqueous recording liquid excellent not only in aqueous liquid solubility but also in water resistance and light fastness.

## Claims

1. A recording liquid containing at least one metal complex compound selected from the group consisting of compounds of the formula (1), 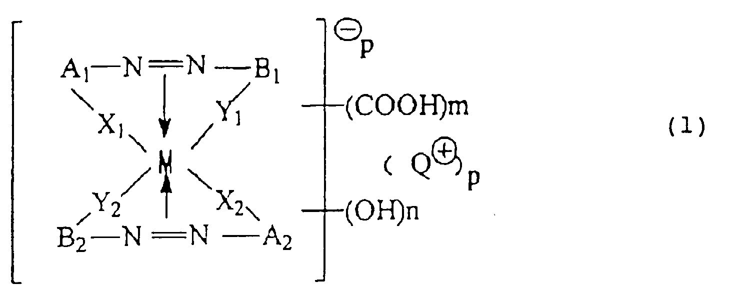 wherein A₁ and A₂ are a substituted or unsubstituted phenyl or naphthyl residue, which may be the same or different, B₁ and B₂ are a substituted or unsubstituted phenyl, naphthyl, pyrazolyl or acetoacetic acid anil residue capable of coupling, which may be the same or different, provided that any of substituents of A₁, A₂, B₁ and B₂ exclude a sulfonic acid group; X₁, X₂, Y₁ and Y₂ are -O-, -COO-, -NR- (in which R is hydrogen or a C₁-C₃ alkyl group) or -S-; m is an integer of from 1 to 6; n is an integer of from 0 to 6; M is Cr, Co, Fe, Ni, Al, Ti or Si; Q is a counter ion; and p is an integer of from 0 to 2.

2. The recording liquid according to Claim 1, wherein in the formula (1), when M is Cr, Co, Fe or Al, p is 1, and when M is Ni or Si, p is 0.

3. The recording liquid according to Claim 1, wherein in the formula (1), when A₁ and A₂ are a substituted phenyl residue, the substituent is a halogen atom, a C₁-C₄ alkyl group, a C₁-C₅ alkoxy group, an aminophenyl group, an acetyl group, an acetylamino group, a nitro group, a phenylazo group or an aryl group; when B₁ and B₂ are a substituted phenyl residue, the substituent is a C₁-C₈ alkyl group, a C₁-C₈ alkoxy group, a halogen atom, a nitro group, an acetylamino group, an alkylamino group (or a substituted alkylamino group), a phenylazo group, a naphthylazo group, an aminophenyl group, a naphthylamino group or an aryl group; M is Fe, Ni, Al or Ti; X₁, X₂, Y₁ and Y₂ are -O- or -COO-; m is an integer of from 1 to 4; n is an integer of from 0 to 6; and Q and p are as defined in Claim 1.

4. The recording liquid according to Claim 1 or 3, wherein in the formula (1), when B₁ and B₂ are a substituted naphthyl residue, the substituent is a halogen atom, a nitro group, a C₁-C₈ alkyl group, a C₁-C₅ alkoxy group, an amino group, a C₁-C₄ alkylamino group, an acetylamino group, a benzoylamino group, a benzoyl group, a sulfomethyl group, a sulfoamide group, a carboxyester group, a carbamoyl group, a phenyl(or substituted phenyl)azo group, a naphthyl(or substituted naphthyl)azo group or an aryl group; and A₁, A₂, X₁, X₂, Y₁, Y₂, m, n, M, Q and p are as defined in Claim 3.

5. The recording liquid according to Claim 1 or 3, wherein in the formula (1), when A₁, A₂, B₁ and B₂ are a substituted naphthyl residue, the substituent is a halogen atom, a nitro group, a C₁-C₈ alkyl group, a C₁-C₅ alkoxy group, an amino group, a C₁-C₄ alkylamino group, an acetylamino group, a benzoylamino group, a benzoyl group, a sulfomethyl group, a sulfoamide group, a carboxyester group, a carbamoyl group, a phenyl(or substituted phenyl)azo group, a naphthyl(or substituted naphthyl)azo group or an aryl group; and X₁, X₂, Y₁, Y₂, m, n, M, Q and p are as defined in Claim 3.

6. The recording liquid according to Claim 1 or 3, wherein in the formula (1), B₁ and B₂ are a pyrazolyl or acetoacetic acid anil residue, and A₁, A₂, X₁, X₂, Y₁, Y₂, m, n, M, Q and p are as defined in Claim 3.

7. The recording liquid according to Claim 1, wherein the metal complex compound of the formula (1) is contained in an amount of from 0.05 to 20 wt%.

8. The recording liquid according to Claim 7, wherein the recording liquid is an aqueous recording liquid containing water as the main component and having a pH of from 7.0 to 11.

9. The recording liquid according to any one of Claims 1 to 8, wherein the recording liquid further contains at least one hydroxide of a metal element selected from the group consisting of 1a and 2a Groups of the Periodic Table.

10. The recording liquid according to Claim 9, wherein the hydroxide is LiOH, NaOH or KOH.

11. A metal complex compound of the formula (2), 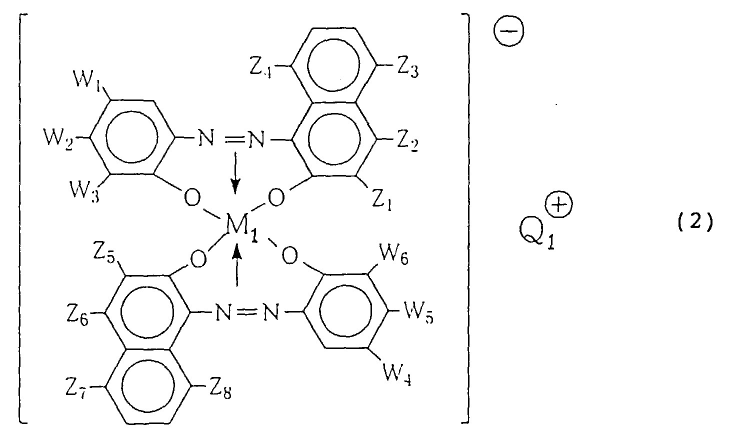 wherein W₁, W₂, W₃, W₄, W₅, W₆, Z₁, Z₄, Z₅ and Z₈ are independently a hydrogen atom, a halogen atom, a nitro group, a methylsulfonyl group, a trifluoromethyl group, a hydroxyl group, a carboxyl group, a C₁-C₈ alkyl group, a C₁-C₅ alkoxy group, a C₁-C₅ alkoxycarbonyl group, an acetyl group, an amino group, a C₁-C₈ alkylamino group, an acetylamino group, a sulfamoyl group which may have a substituent or a carbamoyl group which may have a substituent; either Z₂ or Z₃ is a phenylazo group which may have a substituent, a naphthylazo group which may have a substituent or a carbamoyl group which may have a substituent, and the other is a hydrogen atom; either Z₆ or Z₇ is a phenylazo group which may have a substituent, a naphthylazo group which may have a substituent or a carbamoyl group which may have a substituent, and the other is a hydrogen atom; provided that at least one of W₁, W₂, W₃, W₄, W₅, W₆, Z₁, Z₂, Z₃, Z₄, Z₅ and Z₆ has a hydroxyl group or a carboxyl group in a form of an organic acid; Q₁ is a hydrogen, sodium, potassium, lithium or ammonium ion; and M₁ is an iron, chromium or cobalt atom.

12. The metal complex compound according to Claim 11, wherein in the formula (2), W₁ to W₆ are independently a hydrogen atom, a chlorine atom, a nitro group, a methylsulfonyl group or a sulfamoyl group which may have a substituent; Z₁, Z₄, Z₅ and Z₈ are a hydrogen atom; either Z₂ or Z₃ is a phenylazo (or naphthylazo) group having one or two carboxyl substituents or hydroxyl and carboxyl substituents, and the other is a hydrogen atom; either Z₆ or Z₇ is a phenylazo (or naphthylazo) group having one or two carboxyl substituents or hydroxyl and carboxyl substituents, and the other is a hydrogen atom; M is an iron atom; and Q is a hydrogen atom, a lithium atom, a sodium atom or a potassium atom.

13. The metal complex compound according to Claim 11, wherein in the formula (2), W₁ to W₆ are independently a hydrogen atom, a chlorine atom, a nitro group, a methylsulfonyl group or a sulfamoyl group which may have a substituent; Z₁ and Z₅ are a hydroxyl group; Z₄ and Z₈ are a hydrogen atom; either Z₂ or Z₃ is a phenylazo (or naphthylazo) group having one or two carboxyl substituents or hydroxyl and carboxyl substituents, and the other is a hydrogen atom; either Z₆ or Z₇ is a phenylazo (or naphthylazo) group having one or two carboxyl substituents or hydroxyl and carboxyl substituents, and the other is a hydrogen atom; M is an iron atom; and Q is a hydrogen atom, a lithium atom, a sodium atom or a potassium atom.

14. The metal complex compound according to Claim 12 or 13, wherein the hydroxyl- or carboxyl-substituted phenylazo group is a group selected from the group consisting of the structures shown in the following Table 1.

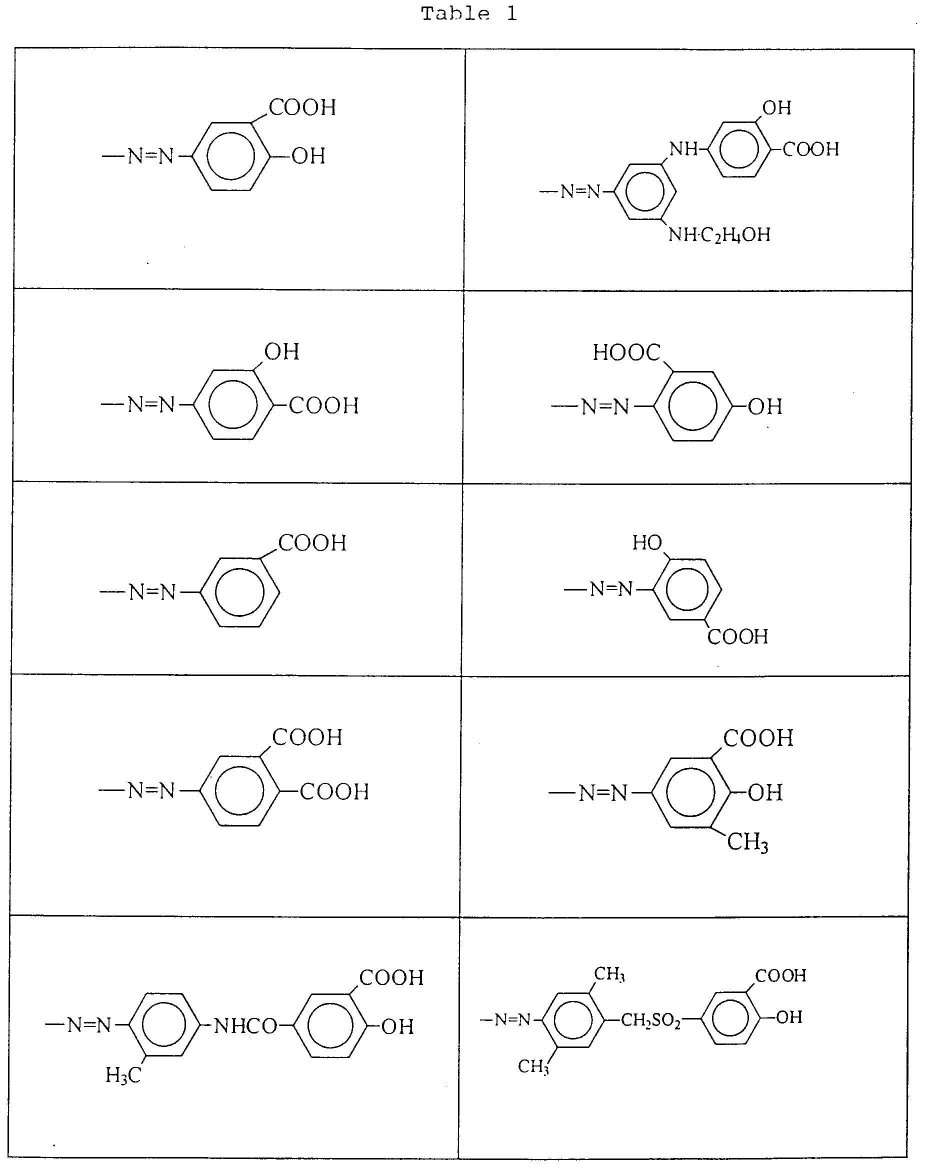

15. The metal complex compound according to Claim 12 or 13, wherein the hydroxyl- or carboxyl-substituted naphthylazo group is a group selected from the group consisting of the structures shown in the following Table 2.

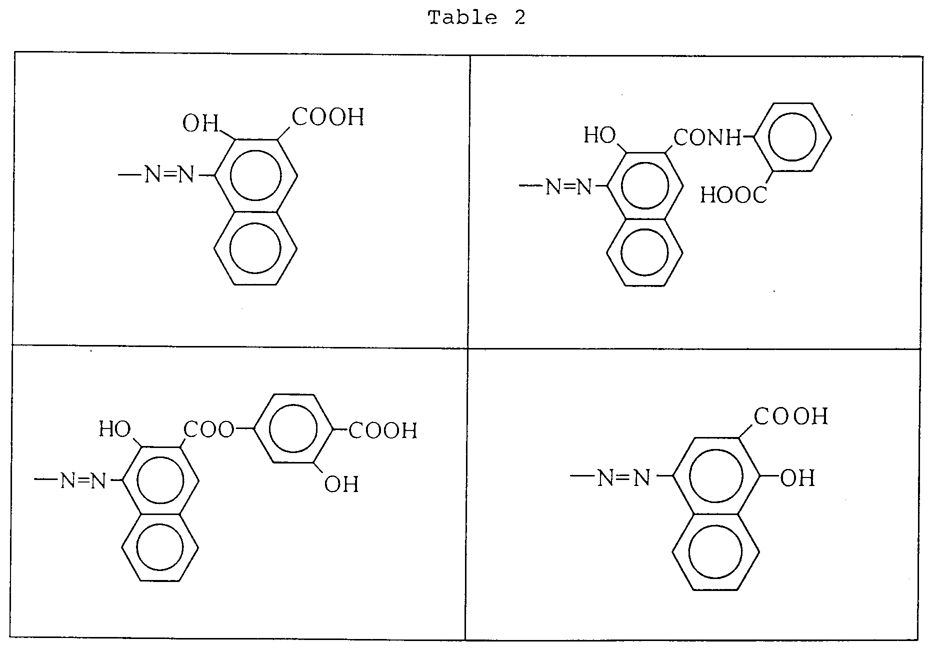

16. The metal complex compound according to Claim 11, wherein in the formula (2), Z₄ and Z₈ are an amino group.
